# EUROPEAN PATENT APPLICATION

(11) **EP 4 671 986 A1**
(43) Date of publication of application: **31.12.2025**
(21) Application number: 24760227.9
(22) Date of filing: 14.02.2024
(51) Int. Cl.: G06F 9/50, G06F 17/16

(54) **ARITHMETIC PROCESSING DEVICE**

(30) Priority: 22.02.2023 JP 2023026462
(71) Applicant: DENSO CORPORATION, Kariya-city, Aichi-pref. 448-8661 (JP)
(72) Inventor: UMEDA Chikahiro, Kariya-city, Aichi-pref., 448-8661 (JP)
(74) Representative: Winter, Brandl - Partnerschaft mbB
(86) International application number: PCT/JP2024/005103
(87) International publication number: WO 2024/176926

(57) **Abstract**

It is an object of the present disclosure to provide an arithmetic processing device. An arithmetic processing device (1) configured from a network having a plurality of nodes, each of which includes a plurality of processor elements, includes: a write-out processing unit (12) that writes out data of image information, which is input, divided and transposed for each node, to a predetermined area in a memory device (20);a change processing unit (13) that changes a correspondence relationship between the predetermined area of the memory device and the node in accordance with a tensor shape of the image information; and a read-out processing unit (14) that reads out the data stored in the memory device to a corresponding node.

## Description

### CROSS REFERENCE TO RELATED APPLICATION

This application is based on and claims the benefits of priority of Japanese Patent Application No. 2023-026462 filed on February 22, 2023, the entire disclosure of which is incorporated herein by reference.

### TECHNICAL FIELD

The present disclosure relates to an arithmetic processing device.

### BACKGROUND ART

In some cases, an arithmetic processing device configured with a plurality of nodes each of which includes a plurality of processor elements (i.e., PE or core) executes an input process of image information such as a neural network process. If the resolution of the input image information is low, the arithmetic processing device executes the process as it is. However, if high-resolution image information is input, the arithmetic processing device may execute the process by dividing and arranging the image information into a plurality of pieces of the image information in the plurality of nodes before the process. An example of such a technique is disclosed in Patent Literature 1.

### PRIOR ART LITERATURES

### PATENT LITERATURE

Patent Literature 1: WO 2011/059090

### SUMMARY OF INVENTION

Patent Literature 1 teaches a method for optimally scheduling divided image information for each node. However, as a result of detailed consideration by the inventor, even if the conventional technique of Patent Literature 1 is used, it is necessary for a software developer to develop a different program for each node while considering how to divide the input image information (as a tensor) for each node, and then load and execute the program. Thus, it is necessary for the software developer to develop a system by considering a tensor division process, so that a burden of the development may be heavy burden for the developer. Additionally, the overall production costs become extremely high when the verification process for the developed software is included, so that a difficulty is found such that the development period becomes longer.

An object of the present disclosure is to provide an arithmetic processing device that executes a process without deeply considering a tensor division step.

In order to achieve the object described above, the present disclosure employs the following measures. It is to be noted that the scope of the claims and the reference numerals in parentheses described in this section indicate the correspondence with the specific means described in the embodiments described later as one embodiment and limit the technical scope of the invention It is not something to do.

An arithmetic processing device according to one aspect of the present disclosure is configured to a network having a plurality of nodes, each of which includes a plurality of processor elements. The arithmetic processing device includes: a write-out processing unit that writes out data of image information, which is input, divided and transposed for each node, to a predetermined area in a memory device; a change processing unit that changes a correspondence relationship between the predetermined area of the memory device and the node in accordance with a tensor shape of the image information; and a read-out processing unit that reads out the data stored in the memory device to a corresponding node.

By configuring as in the present disclosure, it is possible to execute a transposition process without deeply considering a tensor division step. Therefore, the transposition process can be executed even if the same program is executed on multiple nodes.

In one embodiment of the arithmetic processing device, the write out processing unit writes out the data of the image information, which is assigned to each node based on a write request from the node other than a node corresponding to a diagonal component, and divided and transposed, to a predetermined area of the memory device.

In one aspect of the arithmetic processing device, the write out processing unit does not write out to the memory device in response to a write request from the node corresponding to the diagonal component.

The writing out process can be executed as disclosed herein.

In one embodiment of the arithmetic processing device, the write out processing unit reads out the data stored in the predetermined area of the memory device to a corresponding node in response to a read out request from the node other than a node corresponding to a diagonal component.

In one aspect of the arithmetic processing device, the read out processing unit does not read out to the memory device in response to a read out request from the node corresponding to the diagonal component.

The reading out process can be executed as disclosed herein.

The control method for an arithmetic processing device according to one aspect of the present disclosure can be executed as follows. A control method for an arithmetic processing device configured to a network having a plurality of nodes, each of which includes a plurality of processor elements. The arithmetic processing device includes a memory device and a controller that controls the memory device. The controller of the arithmetic processing device: writes out data of image information, which is input, divided and transposed for each node, to a predetermined area in a memory device; changes a correspondence relationship between the predetermined area of the memory device and the node in accordance with a tensor shape of the image information; and reads out the data stored in the memory device to a corresponding node.

### EFFECTS OF INVENTION

Using an arithmetic processing device according to a present disclosure, it is possible to execute a process without deeply considering a tensor division step. Thus, it is possible for a software developer to use common software for each node, and reduce the development burden. Furthermore, since there is no need for different software for each node as in the conventional technique, it is possible to reduce the burden of the verification process and the overall number of steps, so that a development period can be shortened.

### BRIEF DESCRIPTION OF DRAWINGS

FIG. 1 is a block diagram showing an example of a configuration of an arithmetic processing device.
FIG. 2 is a block diagram showing an example of a configuration of hardware of the arithmetic processing device.
FIG. 3 is a flowchart showing an example of the overall process of the arithmetic processing device.
FIG. 4 is a flowchart showing an example of a processing of a write out process in the arithmetic processing device.
FIG. 5 is a flowchart showing an example of a processing of a read out process in the arithmetic processing device.
FIG. 6 is a schematic diagram showing a state in which image information is divided (i.e., state of tensor division).
FIG. 7 is a schematic diagram showing a correspondence relationship between tensor-divided image information and a node.
FIG. 8 is a schematic diagram showing the state in which the image information assigned to each node and executed the tensor division is processed by a transposition process.
FIG. 9 is a diagram schematically showing an example of a write out process.
FIG. 10 is a diagram schematically showing a process of changing the correspondence relationship between the node and a memory bank.
FIG. 11 is a diagram schematically showing another example of a process of changing the correspondence relationship between the node and a memory bank.
FIG. 12 is a diagram schematically showing an example of a write out process.

### EMBODIMENTS FOR CARRYING OUT INVENTION

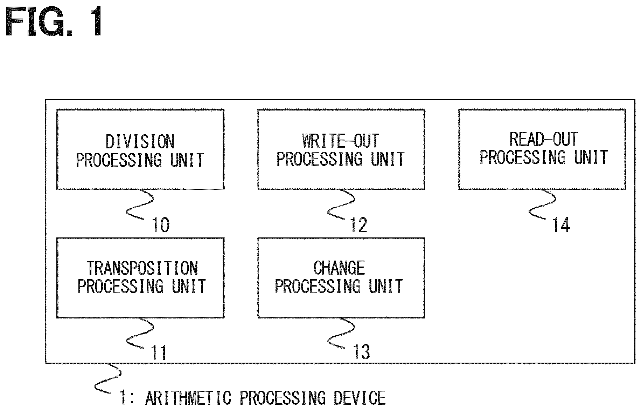

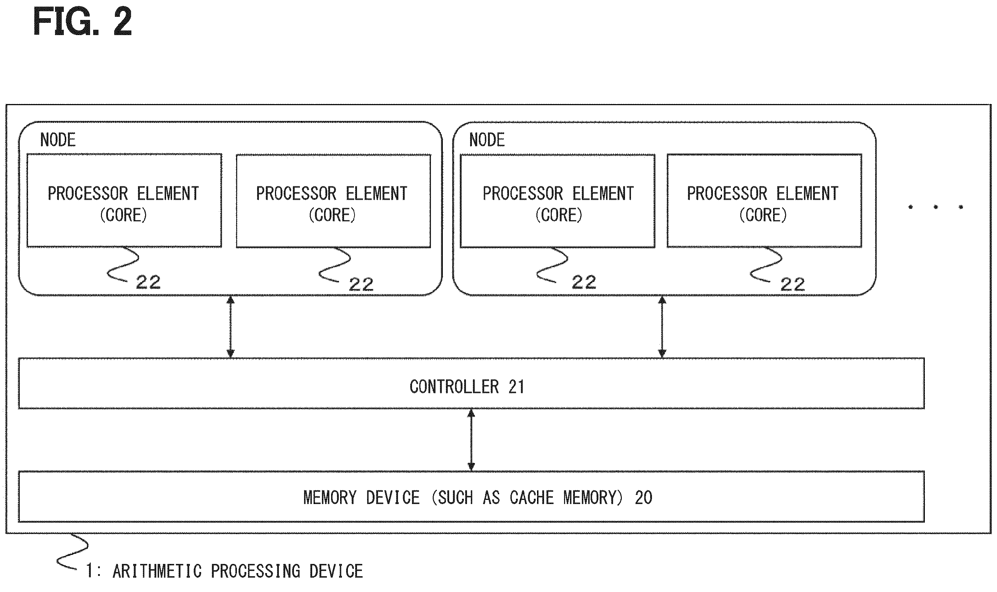

An example of the configuration of each function of the arithmetic processing device 1 is schematically shown in the block diagram of FIG. 1. An example of the hardware configuration of the arithmetic processing device 1 is shown in the block diagram of FIG. 2. The arithmetic processing device 1 is a so-called multi-core processor in which a plurality of processor elements (i.e., PE or core) 22 form one node, and each node constitutes a network. In FIG. 2, two processor elements (i.e., PE) 22 are shown in one node. However, due to the limitation of the drawing, only two processor elements are shown, and actually, two or more processor elements 22 are assigned to one node. For example, as will be explained in the following example, one node may include 3 × 3 processor elements 22 or more processor elements 22.

The memory device 20 may be preferably an SRAM used as a so-called cache memory, alternatively, the memory device 20 may be a device having a storage function other than the SRAM. The controller 21 is a memory controller 21 that controls the memory device 20, and serves as an SRAM controller 21 when the memory device 20 is the SRAM. A program common to each node is loaded into the memory controller 21, which executes the write out process and read out process of data to and from a memory bank.

The arithmetic processing device 1 has a division processing unit 10, a transposition processing unit 11, a write out processing unit 12, a change processing unit 13, and a read out processing unit 14. Each process in the arithmetic processing device 1 is executed by a processing program stored in the controller 21, for example.

In other words, by having the above-described configuration, the arithmetic processing device 1 arranges a common memory controller 21 in the memory device 20 having a general memory bank for multiple nodes, and by changing an operation of the memory access for each node depending on the shape (i.e., tensor shape) of the input image information (i.e., input tensor), the arithmetic processing device 1 executes the transposition process even when the same program is executed on multiple nodes.

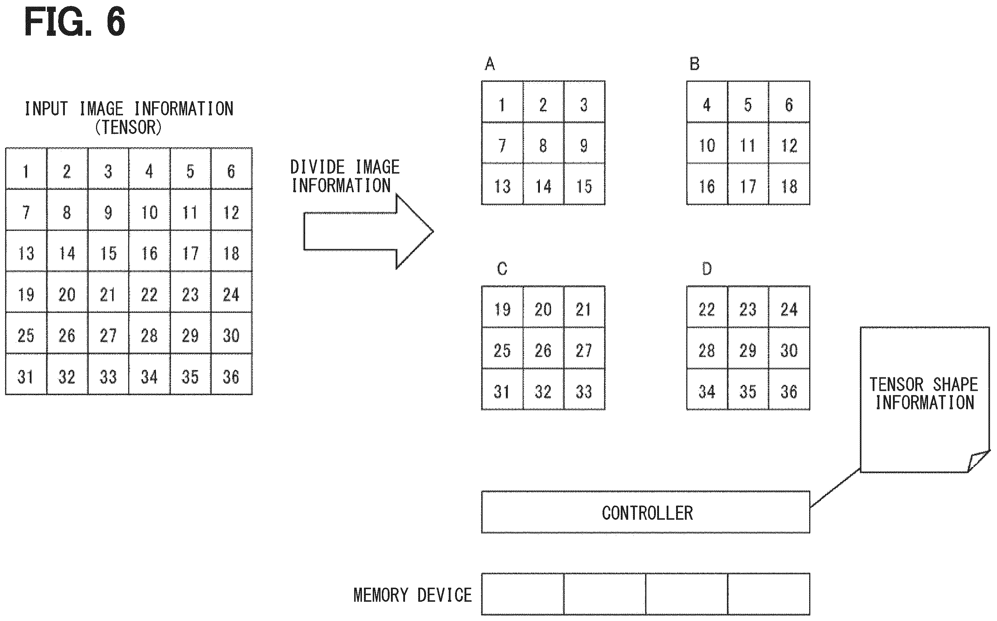

The division processing unit 10 divides the image information input to the arithmetic processing device 1 into nodes by a predetermined method. FIG. 6 shows the state in which the image information is divided. FIG. 6 shows a case where one piece of the image information is divided into four pieces of the image information and the divided image information is assigned to each of nodes A to D. Here, actually, many nodes exist. For ease of understanding, each number in the image information in FIG. 6 indicates each area.

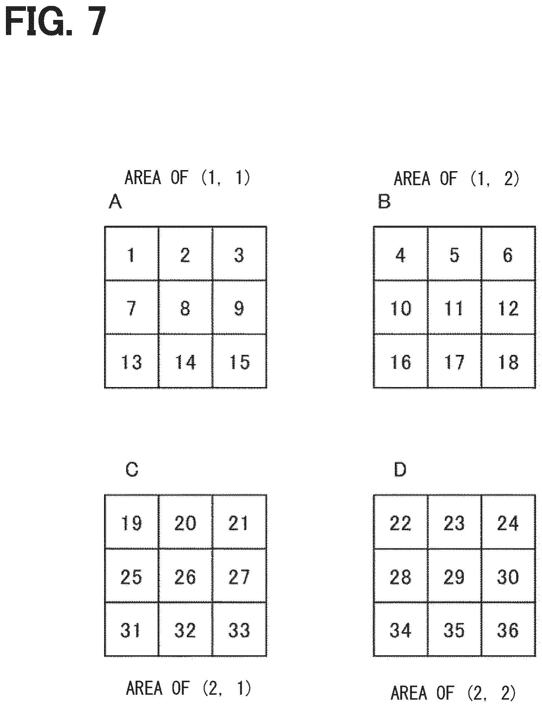

The division processing unit 10 stores in the controller 21 of the memory device 20 information on which nodes the divided image information is assigned to as the tensor shape information. For example, when each area of the divided image information is represented as a matrix, the areas are divided into a 2 x 2 matrix, so the image information of the upper left area defined as (1, 1) is assigned to node A, the image information of the upper right area defined as (1, 2) is assigned to node B, the image information of the lower left area defined as (2, 1) is assigned to node C, and the image information of the lower right area defined as (2, 2) is assigned to node D. This feature is shown schematically in FIG. 7. When the resolution of the input image information is high and the number of divisions of the image information is large, similar processing can be executed by increasing the number of rows and/or the number of columns of the matrix of each area of the divided image information. As the tensor shape information, in addition to expressing to which node the divided image information is assigned using a matrix, other expression methods can also be used.

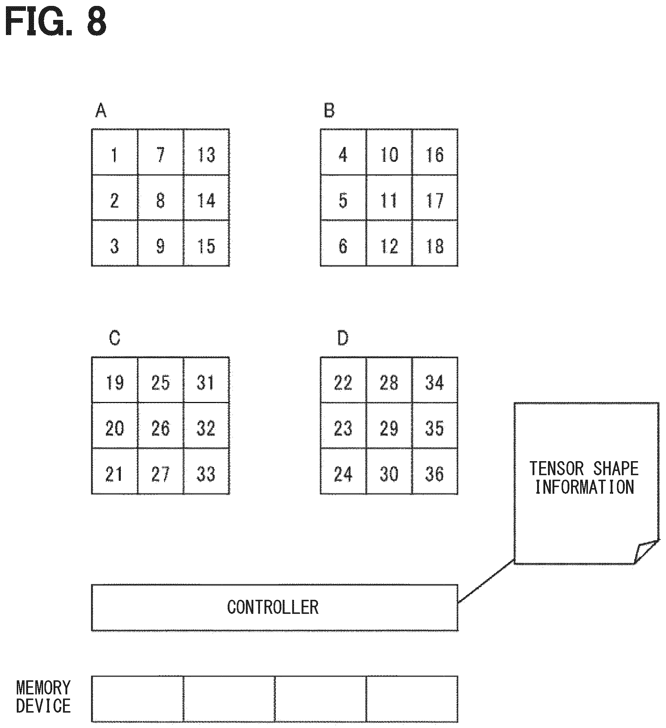

The transposition processing unit 11 executes a transposition process on each of the divided image information assigned to each node. FIG. 8 shows an example of the state in which the image information assigned to each node is processed by a transposition process.

The write out processing unit 12 writes out the data of the divided image information, which is assigned to each node, based on a write request from the node other than a node corresponding to a diagonal component to a memory bank of the memory device 20. If the writing out is completed normally, a status indicating that the writing out process has been successful is returned.

The write out processing unit 12 does not execute an actual process for a node corresponding to the diagonal component in response to the write request from the node (i.e., does not execute the actual write out process), but returns a success status of the write out process.

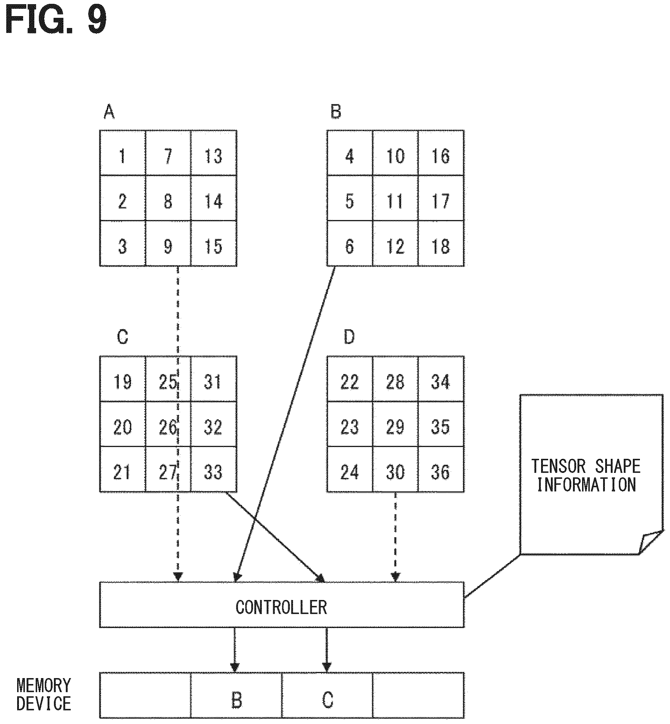

FIG. 9 shows an example of the write out process by the write out processing unit 12. In FIG. 9, the solid arrow indicates that the write out process is executed on the memory device 20, and the dashed arrow indicates that the write out process is not executed on the memory device 20. In addition, in the memory device 20, "B" and "C" indicate states in which the data of node B and node C have been written out to the respective memory banks.

The change processing unit 13 executes a change process for changing the correspondence relationship between the nodes and the memory banks in accordance with the tensor shape of the image information.

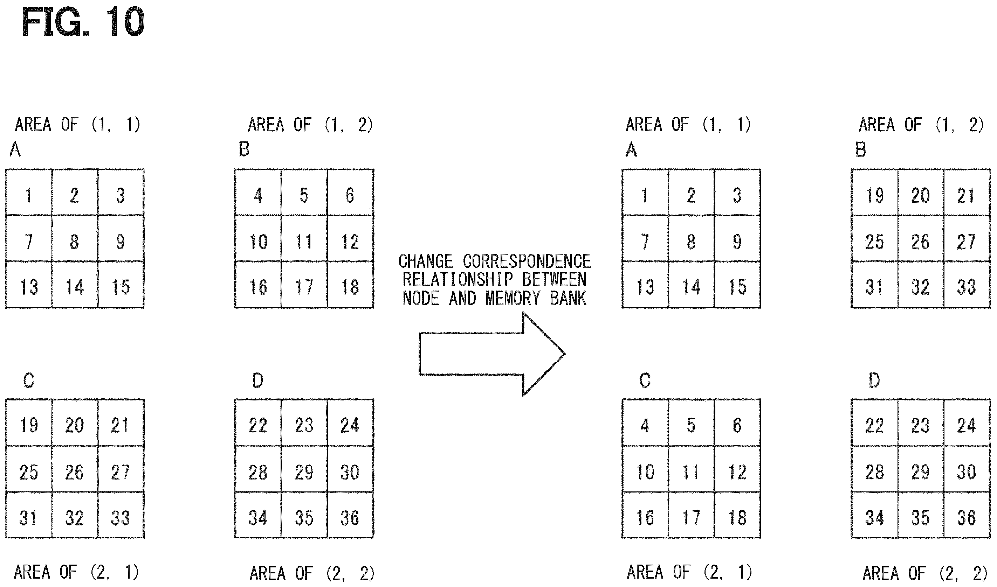

The change processing unit 13 changes the correspondence relationship between the memory banks and the nodes, for the nodes other than the nodes corresponding to the diagonal components. For example, for the memory bank B which stores the data of the node B and the memory bank C which stores the data of the node C, the correspondence relationship between the nodes and the memory banks is changed so that the memory bank B stores the data of the node C and the memory bank C stores the data of the node B. This feature is shown schematically in FIG. 10.

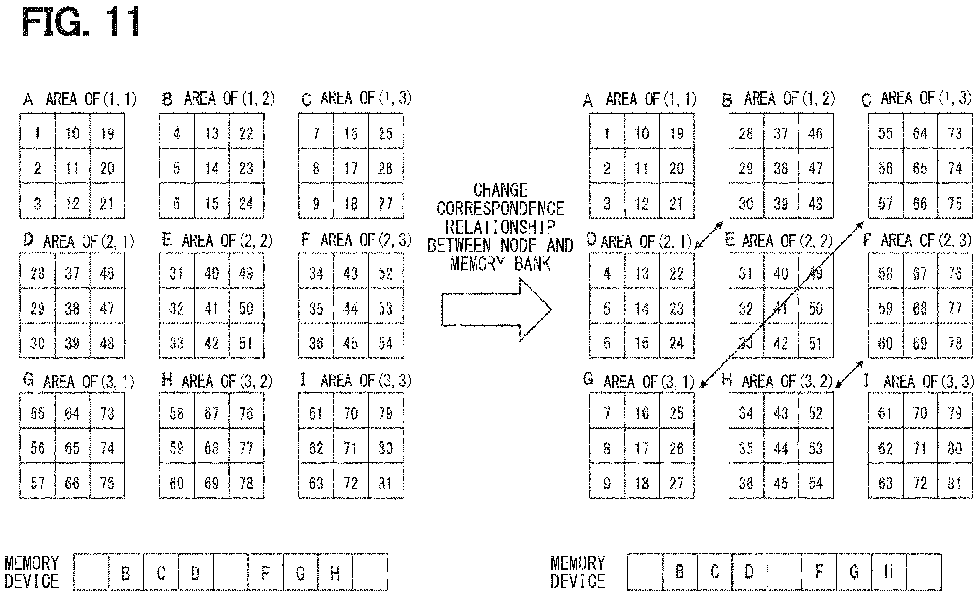

In FIG. 10, the image information is divided into two parts vertically and two parts horizontally. However, if the image information is divided into three parts vertically and three parts horizontally, the correspondence relationship between the nodes and the memory banks can be changed by swapping the rows and columns of the image information in the divided areas. For example, in the case of FIG. 11, there are areas ranging from the (1,1) area of the node A to the (3,3) area of the node I. For the nodes other than the nodes corresponding to the diagonal components, i.e., the node B (corresponding to the (1,2) area), the node C (corresponding to the (1,3) area), the node D (corresponding to the (2,1) area), the node F (corresponding to the (2,3) area), the node G (corresponding to the (3,1) area), and the node H (corresponding to the (3,2) area), the data of the image information divided into each area is stored in the corresponding memory bank. For the nodes other than those corresponding to the diagonal components, the nodes are changed to positions in an area in which the rows and columns of the matrix are swapped. That is, the correspondence relationship between the nodes and the memory banks can be changed by swapping the node B (corresponding to the (1,2) area) with the node D (corresponding to the (2,1) area), the node C (corresponding to the (1,3) area) with the node G (corresponding to the (3,1) area), and the node F (corresponding to the (2,3) area) with the node H (corresponding to the (3,2) area).

The read out processing unit 14 reads out the data of the divided image information, which is assigned to each node, based on a read out request from the node other than a node corresponding to a diagonal component from a memory bank of the memory device 20. If the reading out is completed normally, a status indicating that the reading out process has been successful is returned.

The read out processing unit 14 does not execute an actual process for a node corresponding to the diagonal component in response to the read out request from the node (i.e., does not execute the actual read out process), but returns a success status of the read out process.

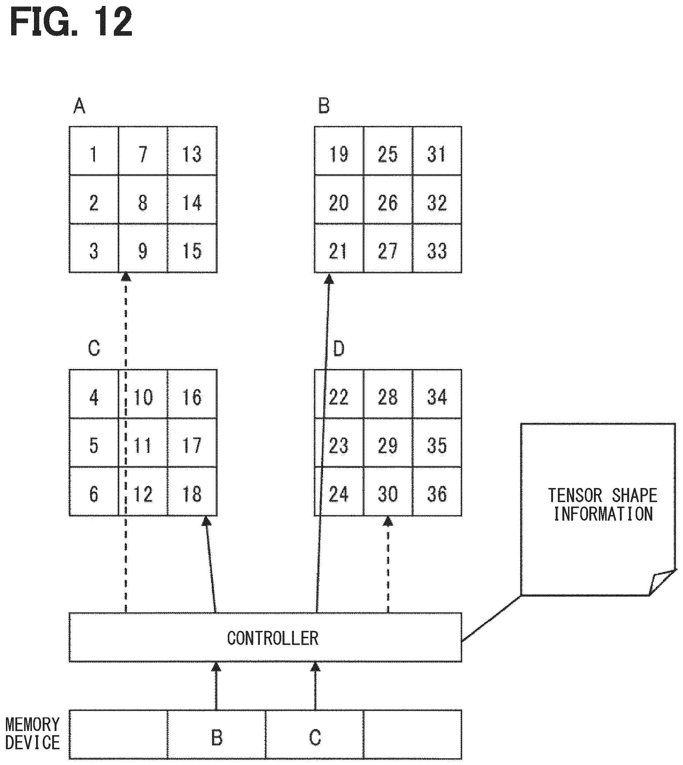

FIG. 12 shows an example of the read out process by the read out processing unit 14. In FIG. 12, the solid arrow indicates that the read out process is executed on the memory device 20, and the dashed arrow indicates that the read out process is not executed on the memory device 20. Also, the data from the memory bank "C" in the memory device 20 is read out to the node B, and the data from the memory bank "B" is read out to the node C. As a result, the data from the memory bank "C" is read out to the area of the node B (corresponding to the (1,2) area), and the data from the memory bank "B" is read out to the area of the node C (corresponding to the (2,1) area).

By executing the above-mentioned processing, it is possible to execute the transposition processing of high-resolution image information while using a common program for each node. This allows processing to be executed without deeply considering the division of the image information (i.e., the tensor division).

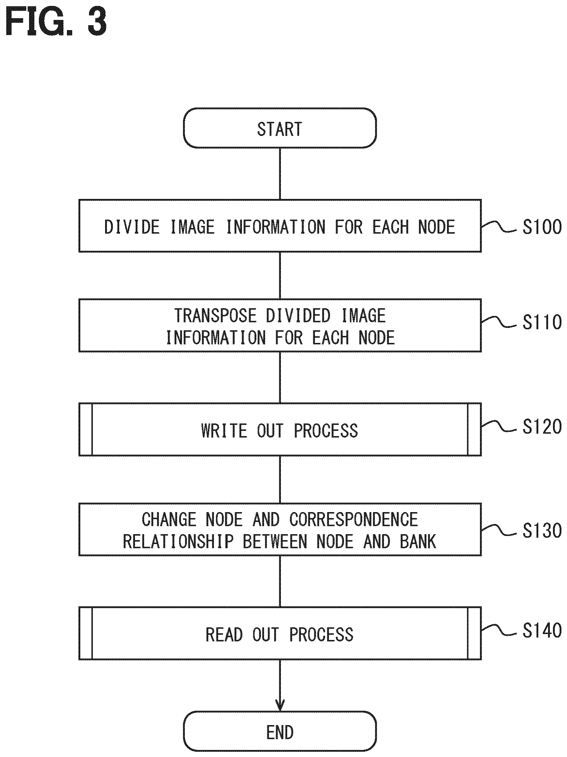

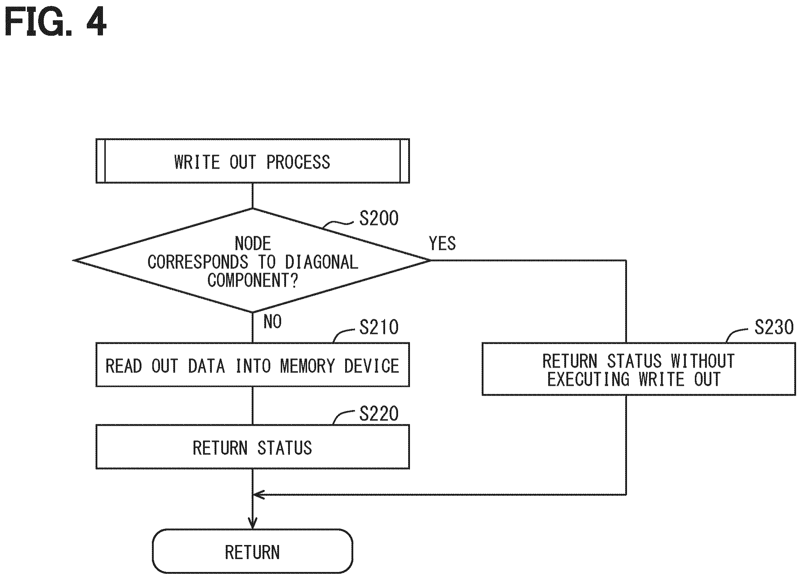

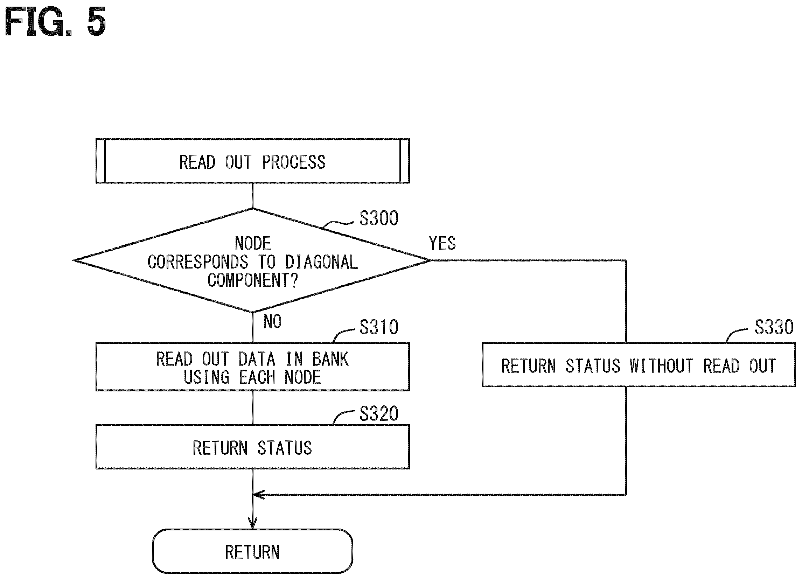

Next, an example of a process in the arithmetic processing device 1 according to one aspect of the present disclosure will be described with reference to the flowcharts of FIGS. 3 to 5.

When the image information as a processing target is input to the arithmetic processing device 1, if the resolution of the image information is high, the division processing unit 10 divides the input image information for each node by a predetermined method (at S100). For example, as shown in FIG. 6, the image information is divided into four pieces, i.e., 2 x 2 areas. The division processing unit 10 stores each pieces of the divided image information as the tensor shape information indicating which nodes the divided image information is assigned to.

As shown in FIG. 8, the transposition processing unit 11 executes a transposition process on the data of each of the divided image information assigned to each node (at S110).

After the transposition process of the divided image information assigned to each node is executed, the write out processing unit 12 executes a write process of writing out the data of each divided image information to a memory bank (at S120).

The write out processing unit 12 writes out the data of the image information of nodes other than the nodes corresponding to the diagonal components, i.e., the nodes B and C in FIG. 8 (at S200), to the memory bank B and memory bank C (at S210), and if the write out is completed successfully, returns a success status of the writing out process (at S220). In addition, for the data of each image information of the nodes corresponding to the diagonal components, i.e., the nodes A and D in FIG. 8 (at S200), the write out processing unit 12 returns a success status of the write out processing (at S230) without actually executing the processing in response to the write out request from each node (i.e., without executing the actual write out processing). These processes are shown in FIG. 9.

After the write out processing by the write out processing unit 12 is completed, the change processing unit 13 changes the correspondence relationship between the nodes and the memory banks for the nodes other than the nodes corresponding to the diagonal components, as shown in FIG. 10 (at S130). By this change process of the correspondence relationship (i.e., the bank swap process), the correspondence relationship between the memory bank B storing the data of the node C and the memory bank C storing the data of the node B are changed.

Then, the read out processing unit 14 executes a read out process to read out the data written out to the memory bank at each node (at S140).

As shown in FIG. 12, for nodes other than the nodes corresponding to the diagonal components (at S300), the read out processing unit 14 reads out the data from the memory bank C to the node B and the data from the memory bank B to the node C (at S310), and if the reading out is completed successfully, returns a success status of the reading out process (at S320). The read out processing unit 14 does not execute an actual process for a node corresponding to the diagonal component in response to the read out request from the node (i.e., does not execute the actual read out process) (at S300), but returns a success status of the read out process (S330).

By executing the above-described processing, even when input image information is divided, it is possible to execute the transposition processing of the image information using a program common to each node.

The arithmetic processing device 1 of the present disclosure is not limited to the scope described in this specification, and can be arbitrarily modified within the scope of its technical concept. Furthermore, the order of each process may be changed as desired within the scope of the technical concept.

### (Industrial Applicability)

Using an arithmetic processing device 1, it is possible to execute a process without deeply considering a tensor division step. Thus, it is possible for a software developer to use common software for each node, and reduce the development burden. Furthermore, since there is no need for different software for each node as in the conventional technique, it is possible to reduce the burden of the verification process and the overall number of steps, so that a development period can be shortened.

## Claims

1. An arithmetic processing device (1) configured from a network having a plurality of nodes, each of which includes a plurality of processor elements,
the arithmetic processing device comprising:
a write-out processing unit (12) that writes out data of image information, which is input, divided and transposed for each node, to a predetermined area of a memory device (20);
a change processing unit (13) that changes a correspondence relationship between the predetermined area of the memory device and the node in accordance with a tensor shape of the image information; and
a read-out processing unit (14) that reads out the data stored in the memory device to a corresponding node.

2. The arithmetic processing device according to claim 1, wherein:
the write out processing unit writes out the data of the image information, which is assigned to each node based on a write out request from the node other than a node corresponding to a diagonal component, and divided and transposed, to the predetermined area of the memory device.

3. The arithmetic processing device according to claim 2, wherein:
the write out processing unit does not write out to the memory device in response to a write out request from the node corresponding to the diagonal component.

4. The arithmetic processing device according to claim 3, wherein:
the write out processing unit reads out the data stored in the predetermined area of the memory device to a corresponding node in response to a read out request from the node other than the node corresponding to the diagonal component.

5. The arithmetic processing device according to claim 4, wherein:
the read out processing unit does not read out to the memory device in response to a read out request from the node corresponding to the diagonal component.

6. A control method for an arithmetic processing device (1) configured to a network having a plurality of nodes, each of which includes a plurality of processor elements,
wherein the arithmetic processing device includes a memory device and a controller that controls the memory device,
the control method for the arithmetic processing device comprising:
by the controller of the arithmetic processing device, writing out data of image information, which is input, divided and transposed for each node, to a predetermined area of a memory device (20);
by the controller of the arithmetic processing device, changing a correspondence relationship between the predetermined area of the memory device and the node in accordance with a tensor shape of the image information; and
by the controller of the arithmetic processing device, reading out the data stored in the memory device to a corresponding node.
